# EUROPEAN PATENT APPLICATION

(11) **EP 1 498 812 A2**
(43) Date of publication of application: **19.01.2005**
(21) Application number: 04253564.1
(22) Date of filing: 15.06.2004
(51) Int. Cl.: G06F 9/445, G06F 9/44

(54) **Software updates**

(30) Priority: 12.07.2003 GB 0316387
(71) Applicant: NCR INTERNATIONAL INC., Dayton, Ohio 45479 (US)
(72) Inventor: Ghafoor, Gameelah, Dundee DD5 2UD (GB); Smith, Martin Reginald, Dundee DD2 2AL (GB); Williamson, Brian, London NW1 6LE (GB)
(74) Representative: Williamson, Brian

(57) **Abstract**

A telecommunications device that is configured to form a connection with another telecommunications device without user intervention; select software that is available on that other device, and receive a copy of that software.

## Description

The present invention relates to a system and method for allowing software to be transferred between devices, and in particular for allowing software to be transferred between mobile devices.

Mobile devices such as mobile telephones and Personal Digital Assistants (PDAs) are becoming increasingly popular. To be useful, these devices require software. At present, PDAs usually are provided with some software pre-installed. Typically the owner can connect them to a desktop computer to install additional software of their choosing or to update the pre-installed software. Mobile telephones are increasingly taking on functions previously associated with PDAs. To achieve this some mobile phones now allow third party applications to be installed on them. A problem with these devices is, however, that they require the active participation of the owner to ensure that they stay up-to-date with the latest software.

An object of the invention is to provide an improved mechanism for updating existing software or providing access to new software.

According to one aspect of the present invention, there is provided a telecommunications device configured to form a connection with another telecommunications device without user intervention; select software that is available on that other device, and receive a copy of that software.

By allowing the device to connect to other devices, and select available software, there is provided a mechanism for allowing the automatic transfer of that software. When the device is a mobile telecommunications device, for example a mobile telephone, and a plurality of such devices are configured in this way, this means that there is provided a very simple and cost effective mechanism for circulating new software and/or software up-dates among a potentially large number of terminals.

Preferably, the device includes a listing of software that it has. This listing may include an identifier for all the software available, including an indication of version number. The device may be configured to compare the software that it has with the software available on the other terminal and based on this comparison select new software or an up-dated version of existing software from that other terminal.

The device may be operable to receive a listing of software that is available on the other device, and use that received listing to identify any software that it may want.

The device may include a user interface. In this case, it may be configured to present a prompt to the user to confirm whether the selected software is to be received and/or installed, and to act in accordance with the user response. In the event that the user does want to have the software installed, the device is configured to install it. In the event that the user does not want to have the software installed, the device may be configured to delete it. Alternatively, the device may be configured to automatically install any new or up-dated software without any user intervention whatsoever.

The device may also be configured to receive an unsolicited request for access to available software from another device. The device may be configured to allow that other device to access some or all of its software. In the event that the other device selects software, the device is configured to send the requested software to that other device. The device may be configured to allow the user to specify or determine terminals that are allowed to receive software or equally devices or terminals that are to be blocked.

Preferably, the device is configured to cause payment of a fee for the selected software. The device may be configured to request user authorisation of the payment and cause payment of the fee in response to authorisation from the user. The device may be configured to automatically install software that costs below a pre-determined amount, and cause payment of that cost. The device may be configured to allow the user to set the pre-determined amount.

According to another aspect of the invention, there is provided a method for receiving or updating software on a telecommunications device, the method comprising: forming a connection with another telecommunications device without user intervention; selecting software on that other device, and receiving a copy of that software.

Preferably the method further involves receiving details, for example a listing, of software on the other device and using this in the step of selecting.

According to yet another aspect of the present invention, there is provided a computer program, preferably on a data carrier or some other computer readable medium, for a telecommunications device, the computer program having code or instructions for forming a connection with another telecommunications device without user intervention; selecting software that is available on that other device, and installing a copy of that selected software.

Preferably, the program includes code or instructions for requesting confirmation from a user that the selected software is to be installed.

Various aspect of the invention will now be described by way of example only and with reference to the accompanying drawings, of which:
Figure 1 is a block diagram of a mobile telephone that is able to communicate with a self-service terminal that has a telecommunications link;
Figure 2 is a block diagram of two mobile telecommunication devices, such as mobile telephones, that are able to communicate;
Figure 3 is a flow diagram of a method for transferring software between telecommunication devices;
Figure 4 is a flow diagram of a method for sending software from one device to another device, and
Figure 5 is a diagrammatic representation of a list of software that is available in one device for transferring to another device.

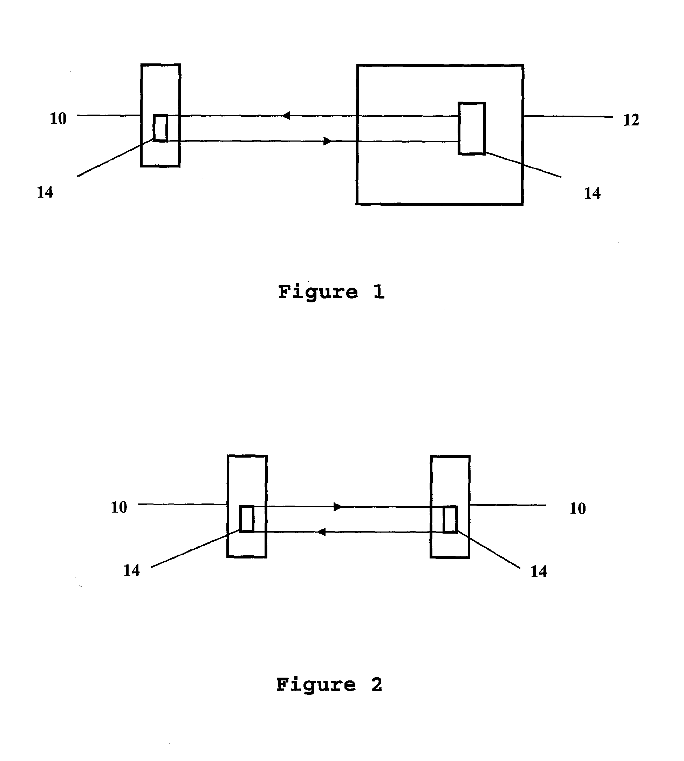

The method in which the invention is embodied allows software and/or software updates to be transferred between devices and installed on an ad-hoc basis with limited or no user intervention. In this context, by software it is meant any code or file or application or part or suite thereof. This transfer or exchange of software can be done between a mobile device 10 and a fixed location terminal 12, for example a self-service terminal, as shown in Figure 1, or two mobile devices 10, as shown in Figure 2. In any case, the participating devices have to have to be able to detect when another device is within range and establish a communication link with that device without user intervention. Devices that have the ability to sense when other devices are within range, such as bluetooth enabled mobile telephones, are currently available and so will not be described herein in detail.

Included in each device is a processor 14 and control software (not shown), which when run is operable to cause a connection with another device to be formed without user intervention; select software from that other device and install that software. Also included is a memory (not shown) for storing various configuration specifications, which may or may not be set by the user, and a list of sharable software. Preferably, this list includes details of the software itself and optionally the devices on which it can run.

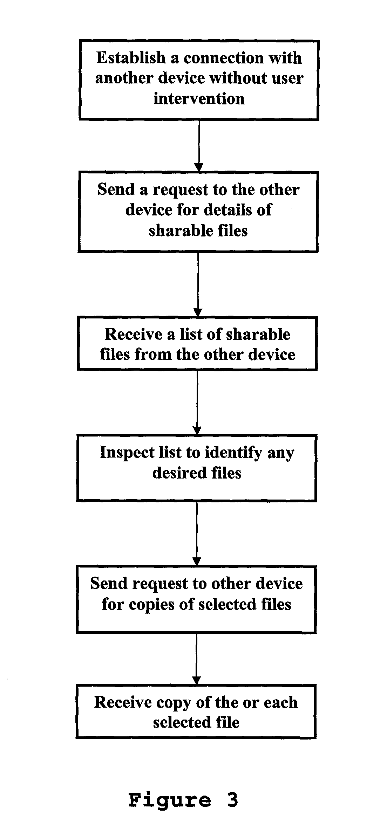

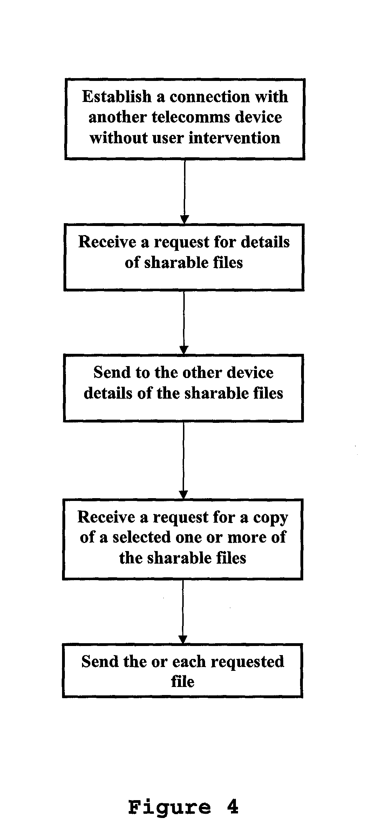

Figure 3 shows in more detail the steps that are taken by a first requesting device to access new or up-dated software on a second device. Each of these steps is implemented by the control software in the first device. The steps taken by the second, receiving device that receives the request from the first device are shown in Figure 4. Each of these steps is implemented by control software in the second device. It should be noted that throughout this description it is presupposed that both devices are in a mode that is suitable for implementation of the methodology in which the invention is embodied. In particular, where one or more of the devices is a mobile telephone or a PDA, it is assumed that the device is switched on and in a suitable operational mode.

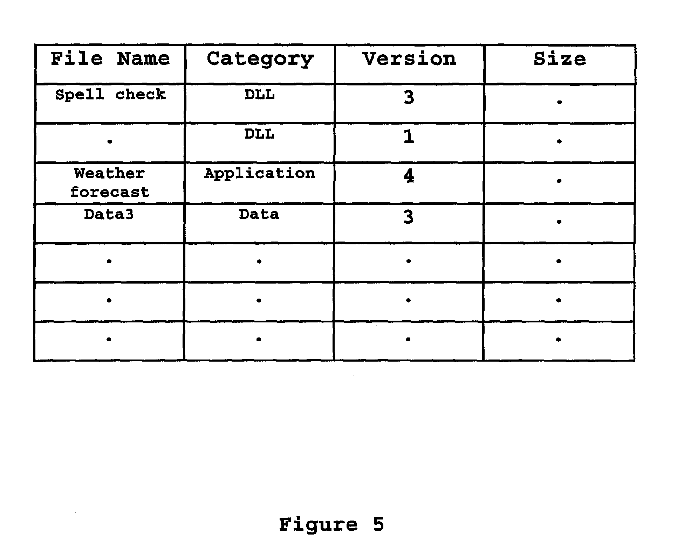

The process is initiated by the first requesting device, when it detects the presence of the second device. The initial step is to cause a connection to the second device to be made. This is done without user intervention. Then, the first device creates and sends to the second device a request for details of sharable files. Included in this request is an identifier that identifies the nature of the first device, for example it may be a mobile phone that requires a particular type of software. Once the request is received, the second device interrogates its list of sharable files to identify those that can be used by the first device and sends to that device details of the files that it is prepared to share. Figure 5 shows an example of a list that could be sent to the first device. Typically, this includes file names that identify the software, details of its category, e.g. shared library, for example a DLL, or sub-component or application, as well as an indication of the version number. Optionally, the list may also include details of any dependencies (not shown) that the files may have, that is details of any other software that may be needed in order to run or use those files. The list may also be adapted to include an identifier that is indicative that the software is a suite of files.

When the listing of sharable software is received at the first device, it compares the names and the version numbers of the sharable software with the corresponding names and version numbers of the software that it currently includes. In the event that it identifies software that it does not have or equally a more recent version of software that it does have, the first device sends a request to the second device for a copy of that software. On receipt of this request, the second device sends a copy of the requested sharable software to the first device.

The second device may be adapted to send the requested software in pre-determined blocks or stages, so that in the event that there is a break in the connection between the devices, at least some of the information is transferred. In the event that only a partial transfer occurs, the control software in the first device is adapted to store the received blocks, as well as an indication that further blocks are needed. In subsequent searches for new or up-dated software, the first device is configured to identify whether other files have the missing blocks and in the event that they do, request that only these missing blocks are downloaded.

Once the desired software is received, the first device either automatically installs it or stores it until a later time when it can then be installed. Ideally, the device is configured to store a list of received software that the user can browse through at a convenient time. Selection of any of the software in the list would cause the device to generate a prompt asking the user to confirm whether or not the software should be installed. This may involve generating a visual prompt on a screen. In the event that the user does not want the software, the control software takes no installation action and deletes the file. In the event that the user does want the software the control software causes it to be installed. Optionally, the newly installed software may be added to a listing of sharable software in the first device. It should be noted that in either case, before attempting to install received software, the device is operable to check whether that software has any dependencies, and so needs other software or information to run. If the file does have dependencies, the requesting device, in this example, the first device, is configured to check whether the sender has all of the dependent files, and also whether it itself has some of the dependent files already available. If none of the dependent files are available on the first device then all of these are requested from the second device. If some of the dependent files are available on the first device, then only those files that are missing are requested and received from the second device.

In order to give the user the flexibility to define settings, the or each of the first and second devices may be configurable to specify certain control features. For example, the device may be configured to allow a user to determine whether large files, or files larger that a pre-determined size, should be received and/or installed. The device may also be configured to allow the user to define the amount of memory space that should be assigned to the received software. This is useful because the user probably does not want their device filled with unsolicited software. In this case, the device would be configured so that once it reaches the allocated amount of memory for the received software, all further received software would be rejected. Typically software that is received and installed would not take up space in the allocated received software memory storage, but instead would be stored elsewhere within the device's memory. Preferably the device is operable to allow the user to specify the amount of storage space that is available on the device. This is in case the available memory on the device is less than the memory allocated to the received software. In addition, ideally, the device should be configured to allow the user to specify that certain files or types of files have a higher priority than others. In this case, the device may be operable to delete lower priority files to make room for higher priority received files.

Because accessing new or up-dated software does not require any user intervention, the present invention provides a mechanism whereby users could be provided with better software whilst going about their normal business. For example, a self service terminal, such as an automated teller machine, in a town centre could be provided with wireless telecommunication functionality for implementing the invention, and new mobile telephone or PDA software that can be shared either by everyone with a suitable mobile device or, for example, by customers of the bank that provides the ATM. In either case, when someone with a suitable mobile telephone or PDA walks within range of the ATM, they would automatically be offered access to the shared files, which could then be transferred to the telephone or PDA. Likewise software could be transferred from mobile telephone to mobile telephone as people move around. In this way, new software could be transferred from one person at one end of a street to another, until everyone along that street has a copy of that new software.

By using the methodology in which the invention is embodied, software can be transferred readily around a large number of users. In some cases, this transfer of software may require that a payment to the original software provider or copyright owner be made. This could be done by including an appropriate charge in the telephone bill of the party receiving or installing the software. Alternatively, the user's credit or debit card could be used. In either case, the payment could be made when the user elects to install the software or after a short trial period during which the user is able to use the software without charge.

Where payment is needed, the device that receives the software is preferably configured to prompt the user to confirm whether they are happy to make this payment in order to install/keep the software. In the event that the user is prepared to pay the fee, and confirms this by using some form of confirmation signal, the device is adapted to send an appropriate command to the user's telecommunications provider, for example the network or service provider, to authorise the addition of the cost of the software to the user's bill. Of course, this would require co-operation between the network or service provider and the owner or supplier of the software to ensure that the payment is passed to the appropriate party. Alternatively, the device may be configured to communicate with the user's financial facilities, such as a credit or debit account, so that payment can be made in this way. Regardless of how the payment is actually effected, rather than having to seek authorisation every time software is received, the device may be configured to automatically authorise the payment of fees below a certain cost level. This cost level could be pre-set or determined by the user.

The payment mechanism could be tiered. For example, a first tier of users who derived the software directly from a software provider could pay a lump sum and then charge second tier users for copies of the software. As a specific example, the first tier user could be a self-service terminal, which could offer the software to users who are using its services.

Whilst in the example described with reference to Figures 3 to 5 the first device is the device that requests new or up-dated software and the second device provides it, it will be appreciated that the first and second devices could both be configured to allow the transfer of sharable files. In this case, both devices would exchange listings of sharable software, with each device being able to gain access to software on the other device.

A skilled person will appreciate that variations of the disclosed arrangements are possible without departing from the invention. For example, the or each device could be configured to allow users to block access to particular devices or categories of devices. Equally, the or each device could be configured to specify the type or category of software that can be received and installed without user interaction. Alternatively or additionally, the or each device could be configured to specify the type and category of software that can be received without user interaction, but which requires a user response to a prompt in order for the software to be installed. Alternatively or additionally, the or each device could be configured to specify the type and category of software that cannot be received under any circumstances.

In addition, whilst the invention is described primarily with reference to mobile telephones or PDAs and self-service terminals, it could equally be applied to any devices with suitable processing and telecommunications functionality. For example, vehicles, such as cars, could include a device that is configured to receive automatic software up-dates every time the car passes, for example, an authorised garage or car salesroom, or indeed any pre-determined terminal. Once this up-dated software is installed, the car may be configured to add it to its list of software that is available to other interested parties. Access to this software may of course be restricted in some manner, for example to cars of the same type. In this way, the up-dated software can be readily spread out and shared. Accordingly, the above description of a specific embodiment is made by way of example only and not for the purposes of limitation. It will be clear to the skilled person that minor modifications may be made without significant changes to the operation described.

## Claims

1. A telecommunications device that is configured to form a connection with another telecommunications device without user intervention; select software that is available on that other device, and receive a copy of that software.

2. A device as claimed in claim 1 that is configured identify new software or an up-dated version of existing software on the other terminal and select any such new or up-dated software.

3. A device as claimed in claim 1 or claim 2 that is configured to receive a listing of software that is available on the other device, and use that received listing to identify any software that it may want.

4. A device as claimed in any of the preceding claims that includes a user interface, and is configured to request confirmation via the user interface that the selected software is to be received and/or installed.

5. A device as claimed in any of the preceding claims configured to receive an unsolicited request for access to available software from another device or details of that software.

6. A device as claimed in claim 5 that is configured to allow that other device to access to details of some or all of its software, preferably by sending a list of such available software to the other device.

7. A device as claimed in claim 6 that is configured to send requested software to that other device, in the event that a request for software is received.

8. A device as claimed in any of claims 5 to 7 configured to allow user specification of devices that are allowed to receive software or equally devices that are to be blocked.

9. A device as claimed in any of the preceding claims that is a wireless device, for example a mobile telephone or a PDA.

10. A device as claimed in any of claims 1 to 8, wherein the device is a self-service terminal, for example an automated teller machine.

11. A device as claimed in any of the preceding claims configured to detect when another telecommunications device is within range and if it is form a connection with it without user intervention.

12. A device as claimed in any of the preceding claims configured to cause payment of a fee for the selected software.

13. A device as claimed in claim 12 configured to request user authorisation of the payment and cause payment of the fee in response to authorisation from the user.

14. A method for receiving or updating software on a telecommunications device, the method comprising: forming a connection with another telecommunications device without user intervention; selecting software on that other device, and receiving a copy of that software.

15. A method as claimed in claim 14 further involving receiving details, for example a listing, of software on the other device and using this in the step of selecting.

16. A method as claimed in claim 14 or claim 15 comprising causing a fee for the software to be paid.

17. A method for receiving or updating software on a telecommunications device, the method comprising: forming a connection with another telecommunications device without user intervention; selecting software on that other device, and receiving a copy of that software, including the steps of:
a) charging a first user of software obtained from the software provider a first licence fee;
b) charging a second user of the software obtained from the first user a second licence fee, which may be different from the first licence fee.

18. A computer program, preferably on a data carrier or some other computer readable medium, for a telecommunications device, computer program having code or instructions for causing a connection with another telecommunications device to be formed without user intervention; selecting software that is available on that other device, and installing a copy of that selected software.
